# DEMANDE DE BREVET EUROPEEN

(11) **EP 0 608 177 A1**
(43) Date de publication de la demande: **27.07.1994**
(21) Numéro de dépôt: 94400113.0
(22) Date de dépôt: 18.01.1994
(51) Int. Cl.: H02K 17/18, H02K 9/18

(54) **Moteur asynchrone à vitesse variable et ventilation forcée**

(30) Priorité: 18.01.1993 FR 9300402
(71) Demandeur: MACHINES TOURNANTES JACQUET, F-27830 Neaufles Saint Martin (FR)
(72) Inventeur: Rousselin, Guy, F-78630 Morainvilliers (FR); Lafon, André, F-27200 Vernon (FR)
(74) Mandataire: Martin, Jean-Paul

(57) **Abrégé**

Ce moteur comporte un rotor (1) et un stator (3), munis de bobinages et logés dans une carcasse (5) ; le rotor est enveloppé dans une double cage de bobinages : la cage extérieure (11) est réalisée en un matériau permettant de développer un couple important dès le démarrage du moteur et est formée de barres rondes ; la cage intérieure (7) formée de barres rectangulaires profondes, est réalisée pour améliorer de façon très importante le couple disponible sur la plage de vitesse après démarrage du moteur, afin d'obtenir un couple constant sur toute la plage de vitesse y compris depuis l'arrêt. Des encoches longitudinales et radiales (15) sont ménagées sur la surface du stator (3) et des canaux axiaux sont percés dans le rotor (1) afin d'assurer un refroidissement efficace par de l'air pulsé par un organe (23) de ventilation. L'invention permet de réaliser un moteur asynchrone à vitesse variable et couple constant dans toute la plage de vitesse y compris l'arrêt, de dimensions et de coût de fabrication très inférieurs à ceux des moteurs asynchrones classiques.

## Description

La présente invention a pour objet un moteur asynchrone à vitesse variable, comportant un rotor central lié à un arbre d'entraînement et un stator, munis de bobinages et logés dans une carcasse.

On sait que les moteurs asynchrones classiques sont alimentés par un courant alternatif et conçus pourfonctionner à une vitesse fixe. Lorsque l'on équipe ces moteurs d'un variateur électronique, celui-ci permet de faire varier la fréquence du courant d'alimentation et ainsi de faire également varier la vitesse de l'arbre de sortie. Mais le courant délivré par le variateur électronique est différent du courant d'alimentation du secteur en raison de la production d'harmoniques et de transitoires, qui produisent un échauffement important du moteur.

Ce dernier doit donc être muni de moyens de refroidissement, par exemple une hélice fixée en bout d'arbre de sortie. Si par conséquent la vitesse diminue, la puissance de la ventilation diminue également. Or, si l'on veut un couple constant dans une plage de vitesse déterminée, les pertes, essentiellement par effet Joule, restent sensiblement constantes. En effet à basse vitesse l'ampérage augmente, donc aussi l'échauffement, alors que la puissance de la ventilation diminue, puisqu'elle est proportionnelle à la vitesse de rotation du moteur. Ainsi à faible vitesse, l'échauffement reste très important alors que le débit d'air de refroidissement est faible.

Ce constat conduit, pour un moteur asynchrone à auto-ventilation, à le surdimensionner pour que son rotor et son stator puissent supporter sans dommages les échauffements importants produits. Ainsi par exemple un moteur auto-ventilé devant délivrer 100 Kg/Watt à 1500 tours/min et fonctionnant à couple constant dans la plage de vitesse 500-1500 tours/min doit être dimensionné environ pour 170 Kg/Watt, ce qui le rend considérablement plus onéreux que le coût qui devrait résulter des besoins effectifs.

On a aussi proposé de résoudre ce problème en choisissant un moteur dont la vitesse synchrone est plus faible, mais cela conduit également à retenir un moteur plus volumineux et donc plus coûteux.

L'invention a donc pour but de proposer un moteur asynchrone à vitesse variable, réalisé de manière à pouvoir fonctionner à couple constant sur toute la plage de vitesse prévue, y compris à partir de l'arrêt, tout en résistant aux échauffements importants produits, même à basse vitesse.

Conformément à l'invention, le rotor est enveloppé par au moins un bobinage formant une cage réalisée en un matériau choisi pour pouvoir développer un couple de démarrage au moins égal au couple nominal d'un moteur asynchrone de même hauteur d'axe et du type à vitesse fixe, ce couple nominal étant au moins égal à 150% environ du couple nominal d'un moteur asynchrone de même hauteur d'axe et du type à vitesse fixe, et pouvant être fourni sans limitation de durée de zéro tour/sec jusqu'à la vitesse nominale du moteur, et ce moteur comporte des moyens de refroidissement interne agencés à proximité immédiate des bobinages du stator et du rotor.

On peut ainsi réaliser un petit moteur asynchrone à vitesse variable, de faibles dimensions, dont le rotor est muni d'une seule cage, et choisi en un matériau approprié ayant à la fois une haute résistance à l'échauffement et une résistance électrique moyenne. Un tel matériau convenable peut être par exemple du bronze.

Suivant un mode de réalisation de l'invention, la cage est constituée de barres à section rectangulaire allongée radialement vers l'axe du rotor, ces barres étant disposées autour du rotor, fixées à celui-ci et raccordées entre elles à leurs extrémités.

Suivant une autre forme de réalisation de l'invention, le rotor est pourvu d'une seconde cage, extérieure à la première cage et entourant celle-ci, formée par un bobinage choisi en un matériau à haute résistance électrique et haute tenue à l'échauffement provoqué par le passage du courant électrique, tandis que le bobinage de la première cage est choisi en un matériau à haute résistance à l'échauffement et faible résistance électrique.

Le matériau constituant la première cage, intérieure, peut être par exemple du cuivre tandis que le matériau constitutif de la cage extérieure peut être du bronze.

Ces matériaux résistent aux échauffements dégagés par les harmoniques et les transitoires des courants délivrés par des variateurs de fréquence. De plus, les cages en cuivre et alliage de cuivre ont l'un des meilleurs coefficients de transfert thermique possibles, ce qui améliore l'évacuation des pertes Joule.

Dans les deux modes de réalisations mentionnés ci-dessus, à savoir le premier avec une seule cage de bobinage à section rectangulaire s'étendant radialement, et le second avec deux cages coaxiales, la cage intérieure, la plus proche de l'axe du rotor, permet d'améliorer, de façon très importante, le couple disponible sur la plage de variation de vitesse du moteur après démarrage de celui-ci. Ce résultat avantageux est rendu possible par la forme rectangulaire, étroite et profonde des barres du bobinage de cette cage.

Ainsi, alors que dans un moteur asynchrone classique, le couple développé est proportionnel à la vitesse, les bobinages du moteur selon l'invention permettent de développer un couple constant sur la totalité de la plage de variation de vitesse, y compris l'arrêt. Il est de ce fait possible, à performances équivalentes, d'uti liser des moteurs asynchrones dont les dimensions et par conséquent le coût de fabrication sont beaucoup plus faibles que ceux nécessaires jusqu'à présent.

Par ailleurs le système de refroidissement interne du moteur également prévu par l'invention permet de refroidir au plus près possible les bobinages du stator et du rotor, qui ainsi résistent aux échauffements importants développés. L'invention résoud donc de façon élégante le problème de l'échauffement à basse vitesse et couple constant du moteur.

D'autres particularités et avantages de l'invention apparaîtront au cours de la description qui va suivre, faite en référence aux dessins annexés qui en illustrent une forme de réalisation à titre d'exemple non limitatif.
La figure 1 est une demi-vue en coupe axiale et élévation partielle d'une forme de réalisation du moteur asynchrone à vitesse variable selon l'invention.
La figure 2 est une vue mi-coupe transversale mi- élévation suivant la ligne 2-2 de la Fig.1.
La figure 3 est une vue en élévation en bout du rotor du moteur des Fig.1 et 2.
La figure 4 est une vue en élévation latérale d'une extrémité du rotor du moteur des Fig.1 à 3.

Le moteur asynchrone à vitesse variable représenté aux dessins est équipé d'un variateur électronique de fréquence (connu en soi et non représenté). Ce moteur comprend un rotor central 1 pourvu d'un arbre d'entraînement 2 et un stator périphérique 3, pourvu de bobinages 4. Le rotor 1 et le stator 3 sont logés dans une carcasse 5 et, aux extrémités opposées du rotor 1, l'arbre 2 traverse des paliers 6 fixés à la carcasse 5.

Le rotor 1 est équipé à sa périphérie d'une première cage 7 de bobinage, constitué d'une série de barres 8 à section rectangulaire, allongée radialement vers l'axe géométrique XX du rotor. Les barres 8 sont disposées autour du rotor 1 en formant une cage cylindrique qui s'étend sur toute la longueur des tôles du rotor 1, auxquelles elles sont fixées par exemple par des lignes de soudure 9.

Le rotor 1 est pourvu d'une seconde cage 11, extérieure à la première cage 7 et entourant celle-ci. La cage 11 est constituée de barres 12 à section circulaire, s'étendant parallèlement à l'axe XX et disposées annulairement autour de la première cage 7. Les barres rondes 12 sont fixées aux tôles extérieures 13 du rotor 1 partout moyen approprié, par exemple par des lignes de soudure 14, et sont chacune en contact avec une barre rectangulaire 8 placée en vis-à-vis.

Les barres 8 de la cage "profonde" 7 sont réalisées en un matériau à haute résistance à l'échauffement provoqué par le courant électrique et faible résistance électrique, tandis que les barres rondes 12 de la cage extérieure 11 sont constituées en un matériau à haute résistance électrique et haute tenue à l'échauffement, ces matériaux pouvant être par exemple ceux précédemment cités. La cage extérieure 11 permet de créer un couple important dès le démarrage du moteur, son matériau constitutif étant choisi pour pouvoir développer un couple nominal au moins égal à 150% du couple nominal d'un moteur asynchrone de même hauteur d'axe et du type à vitesse fixe, et pouvant être fourni de zéro tour/sec jusqu'à la vitesse nominale du moteur et ce, sans limitation de durée.

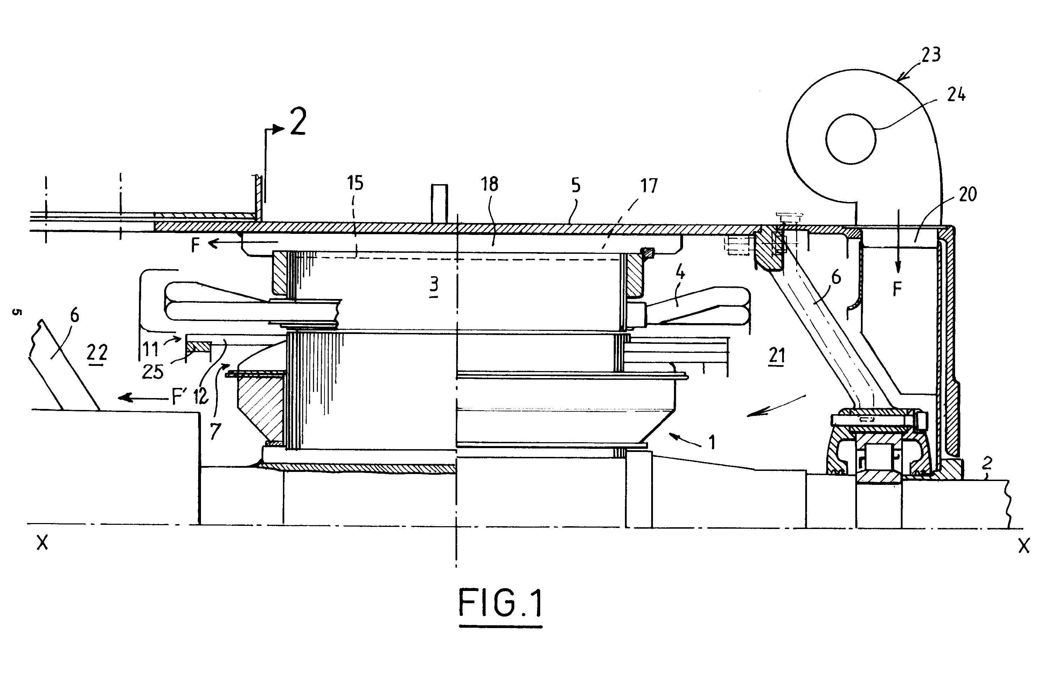

Par ailleurs le moteur est pourvu d'un système de refroidissement interne, aussi bien du rotor 1 que du stator 3, permettant de refroidir au plus près possible leurs bobinages respectifs 4, 8 et 12. Dans l'exemple de réalisation décrit, ce système de refroidissement est constitué de la manière suivante : une série d'encoches radiales 15 est ménagée sur la surface extérieure des tôles 16 du stator 3, et s'étendent parallèlement à l'axe XX de ce dernier et du rotor 1. La surface extérieure du rotor 3 et donc l'ensemble des encoches radiales 15 délimite, avec la surface intérieure de la carcasse 5, un espace annulaire 17 s'étendant sur tout le pourtour du stator 3. Ce dernier est maintenu en place par appui sur des entretoises longitudinales 18 fixées à intervalles angulaires réguliers à la carcasse 5, par exemple par des cordons 19 de soudure. L'air peut donc circuler d'une extrémité à l'autre du stator 3 sur la surface extérieure de celui-ci et dans les encoches 15, entre une entrée d'air 21 (Fig.1) et une sortie d'air 22 délimitées par les extrémités opposées de la carcasse 5. L'entrée d'air 21 débouche dans une ouverture 22, percée dans l'extrémité de la carcasse 5 et qui communique avec un organe de ventilation 23, constitué par exemple par un ventilateur actionné par un petit moteur électrique interne 24.

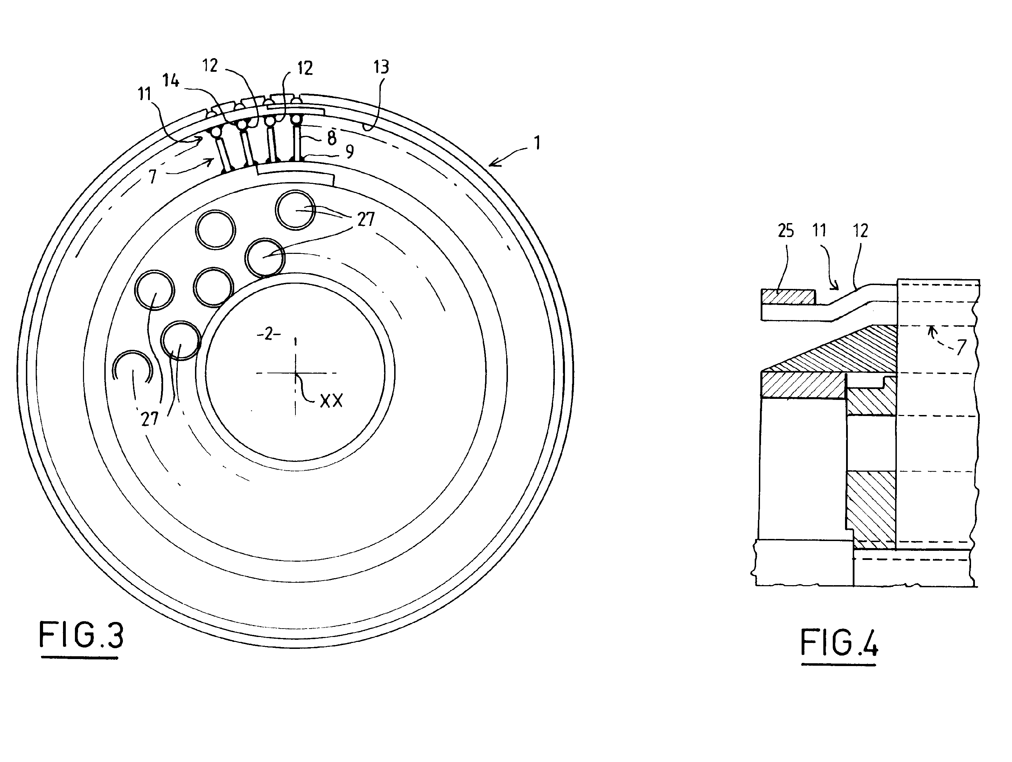

Les extrémités des barres extérieures 12 sont reliées par des bagues 25 (Fig.4).

Le système de refroidissement du moteur est complété par un ensemble de canaux longitudinaux 27 de ventilation, réalisés dans le rotor 1 coaxialement à celui-ci et dont les extrémités opposées communiquent avec l'entrée 21 et la sortie d'air 22. Les canaux 27 sont de préférence distribués de façon régulière autour de l'arbre 2.

D'autre part, le couple maximum fourni par la cage extérieure 11 est d'au moins environ 50% supérieur au couple nominal du moteur objet de l'invention; ce couple maximum peut être fourni de zéro tour/sec jusqu'à la vitesse nominale du moteur, et il est au moins égal à deux fois le couple nominal d'un moteur asynchrone de même taille (même hauteur d'axe), mais non conçu pour la variation de vitesse.

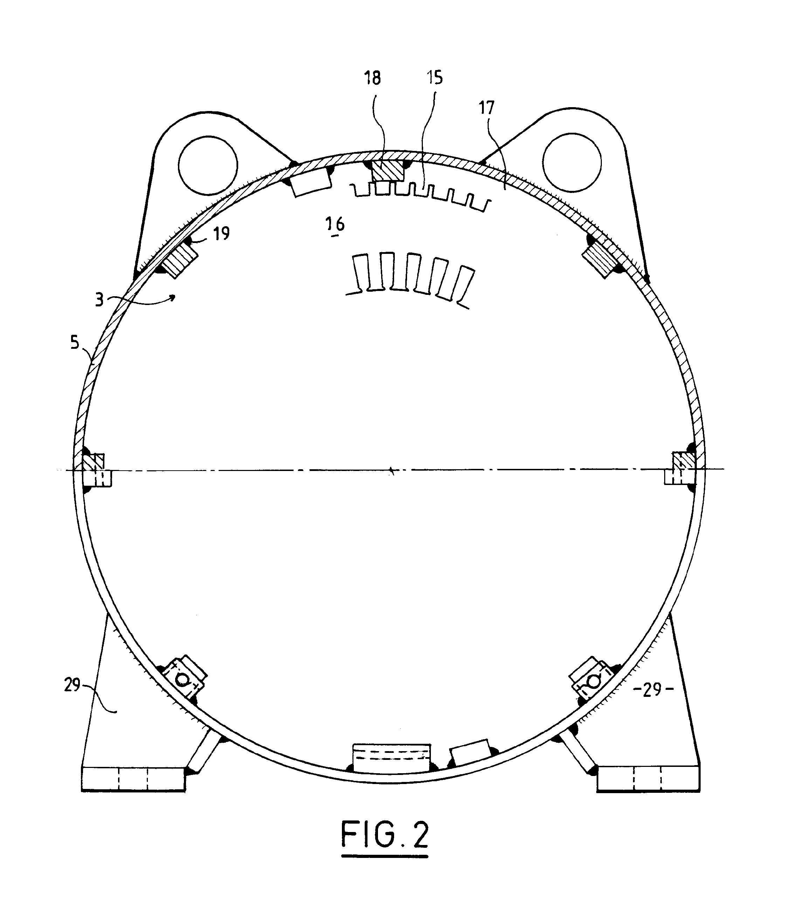

Par ailleurs le moteur asynchrone qui vient d'être décrit est réalisé de façon connue en soi et ne nécessite donc pas de description complémentaire. On voit notamment sur la Fig.2 des pattes extérieures 29 d'appui fixées à la carcasse 5.

En fonctionnement, le moteur selon l'invention dégage dans les bobinages 4, 7 et 11 une quantité importante de chaleur qui peut être aisément évacuée grâce à la circulation d'air sur la périphérie du stator 3 dans les encoches 15, ainsi que dans les canaux 27 du rotor 1 (flèches F sur la Fig.1). Comme déjà indiqué, ce moteur permet de développer un couple constant sur toute la plage de vitesse du moteur, de zéro tour/sec à la vitesse nominale tout en évacuant efficacement la chaleur dégagée grâce à son système de refroidissement. En particulier, les encoches 15 permettent de refroidir les tôles du stator 3 en profondeur, car une circulation d'air uniquement sur la surface du stator 3, en l'absence des encoches 15, serait insuffisante. Il en est de même pour la dissipation de la chaleur dégagée dans le rotor 1, grâce aux canaux axiaux 27.

L'invention est susceptible de diverses variantes de réalisation. Ainsi il est possible de supprimer la cage extérieure 11, en réalisant un petit moteur pourvu uniquement de la cage intérieure 7. Celle-ci est alors réalisée en un matériau ayant des caractéristiques intermédiaires entre celles de la cage extérieure 11 et de la cage intérieure 7 du mode de réalisation illustré aux dessins. Par ai Ileurs le venti lateur 23 peut être séparé de la carcasse 5 et simplement raccordé à l'ouverture d'entrée 22 par une conduite appropriée. L'organe de ventilation 23 peut également être remplacé par un échangeur (non représenté) air-air ou air-eau, monté sur la carcasse 5 ou disposé à proximité et raccordé dans le second cas à l'entrée d'air 20, 21 et à la sortie d'air 22, ou encore par une buse.

## Revendications

1. Moteur asynchrone à vitesse variable comportant un rotor central (1) et un stator (3), munis de bobinages et logés dans une carcasse (5), caractérisé en ce que le rotor est enveloppé par au moins un bobinage (8) formant une cage (7) réalisée en un matériau choisi pour pouvoirdévelop- per un couple nominal au moins égal à 150% environ du couple nominal d'un moteur asynchrone de même hauteur d'axe et du type à vitesse fixe, ce couple nominal pouvant être fourni sans limitation de durée de zéro tour/sec jusqu'à la vitesse nominale du moteur, et en ce que ce moteur comporte des moyens (15,27, 23) de refroidissement interne agencés à proximité immédiate des bobinages (4, 8, 12) du stator et du rotor.

2. Moteur selon la revendication 1, caractérisé en ce que la cage (7) est constituée de barres (8) à section rectangulaire allongée radialement vers l'axe (XX) du rotor (1), ces barres étant disposées autour du rotor, fixées à celui-ci et raccordées entre elles à leurs extrémités.

3. Moteur selon l'une des revendications 1 et 2, caractérisé en ce que le rotor (1) est pourvu d'une seconde cage (11) extérieure à la première cage (7) et entourant celle-ci, formée par un bobinage (12) choisi en un matériau à haute résistance électrique et haute tenue à l'échauffement provoqué par le passage du courant électrique, tandis que le bobinage (8) de la première cage (7) est choisi en un matériau à haute résistance à l'échauffement et faible résistance électrique.

4. Moteur selon la revendication 3, caractérisé en ce que la cage extérieure (11) est constitué de barres (12) à section circulaire s'étendant parallèlement à l'axe (XX) du rotor (1) et disposées annulairement autour de la première cage (7).

5. Moteur selon l'une quelconque des revendications 1 à 4, caractérisé en ce que les moyens de refroidissement comprennent une série d'encoches radiales (15) ménagées sur la surface extérieure des tôles du stator (3) et s'étendant parallèlement à l'axe (XX) de ce dernier et du rotor (1), et un espace annulaire (17) de circulation d'air de refroidissement ménagé entre la surface extérieure du stator et la carcasse (5) du moteur, communiquant avec une entrée (21) et une sortie (22) d'air agencées aux extrémités de la carcasse.

6. Moteur selon la revendication 5, caractérisé en ce que des canaux longitudinaux (27) de ventilation sont réalisés dans le rotor (1) et répartis coaxialement à celui-ci, ces canaux communiquant à leurs extrémités avec l'entrée (20, 21) et la sortie d'air (22).

7. Moteur selon les revendications 5 et 6, caractérisé en ce que les moyens de refroidissement comprennent un venti lateur (23) monté sur la carcasse (5) en regard de l'entrée (20, 21) ou de la sortie d'air (22), ou raccordé à l'une d'elles.

8. Moteur selon les revendications 5 et 6, caractérisé en ce que les moyens de refroidissement comportent un échangeur air-air ou air-eau, monté sur la carcasse (5) ou disposé à proximité, raccordé à l'entrée (20, 21) et à la sortie d'air (22) ou par une buse.
